# EUROPEAN PATENT APPLICATION

(11) **EP 4 815 264 A1**
(43) Date of publication of application: **30.09.2026**
(21) Application number: 26156605.3
(22) Date of filing: 05.02.2026
(51) Int. Cl.: H02K 1/32, H02K 7/00, H02K 1/276, H02K 9/19

(54) **ROTOR COOLING STRUCTURE OF ROTARY ELECTRIC MACHINE**

(30) Priority: 27.03.2025 JP 2025054126
(71) Applicant: MAZDA MOTOR CORPORATION, Hiroshima 730-8670 (JP)
(72) Inventor: Akihiro, Ochi, Aki-gun, Hiroshima, 730-8670 (JP); Taichi, Maki, Aki-gun, Hiroshima, 730-8670 (JP)
(74) Representative: Lorenz Seidler Gossel Part. mbB

(57) **Abstract**

[Problem] To be able to cool an entire rotor in a well-balanced manner by using rotation.

[Solution] A rotor cooling structure of a rotary electric machine cools by supplying a coolant to a passage in a specific shape. A shaft has an in-shaft passage, into which the coolant flows from one end thereof. A rotor has a first cooling passage, into which the coolant is introduced from an upstream side thereof, and a second cooling passage, into which the coolant is introduced from a downstream side thereof. The first cooling passage has a first introduction passage extending radially outward from the in-shaft passage and a first main passage communicating with a downstream side thereof and extending in an axial direction. The second cooling passage has a second introduction passage extending radially outward from the in-shaft passage and a second main passage communicating with a downstream side thereof and extending in the axial direction. A first bent portion bent in an direction of forward rotation is provided in the first introduction passage, and a second bent portion bent in a reverse rotation direction is provided in the second introduction passage.

## Description

### [Technical Field]

The disclosed technique relates to a rotor cooling structure of a rotary electric machine suitable for driving an automobile.

### [Background Art]

In recent years, automobiles such as hybrid vehicles and electric vehicles have been electrified. A drive motor that is mounted on an automobile is required to generate stable output in a wide driving range that corresponds to various driving situations.

A permanent magnet synchronous motor is widely used as this type of motor, and a permanent magnet that generates a strong magnetic force is assembled to a rotor thereof in order to output high torque. When the motor is driven, a large current flows through a stator coil thereof. A magnetic field that is formed thereby acts on the rotor. Consequently, the rotor rotates, and the automobile travels.

At this time, the stator and the rotor generate heat and become a high temperature. As a load and a rotational frequency are increased, a heat generation amount is increased. Meanwhile, when a temperature of the permanent magnet becomes excessively high, the magnetic force thereof is reduced due to demagnetization action. Therefore, cooling of the rotor is important in order to prevent an excessive temperature increase of the permanent magnet.

For example, Patent Literature 1 discloses the related art of a rotor cooling structure. In a rotor thereof, a rotor core (23) having plural permanent magnets is integrated coaxially with a rotor shaft (22) that is supported in a freely rotatable manner. A pair of end plates (26a, 26b) are in close contact with both sides of the rotor core. Then, plural refrigerant flow paths, through each of which oil flows, are formed in these rotor shaft, rotor core, and pair of end plates.

More specifically, plural paths, which cause the oil to flow into the first end plate from an in-shaft oil path (41) in the rotor shaft and then flow out through the rotor core and the second end plate, and plural paths, which cause the oil to flow into the second end plate from the in-shaft oil path in the rotor shaft and then flow out through the rotor core and the first end plate, are formed.

### [Citation List]

### [Patent Literature]

[Patent Literature 1] JP2010-239799A

### [Summary of Invention]

### [Technical Problem]

In the rotor cooling structure of Patent Literature 1, rotation of the rotor is not taken into consideration. Thus, there is a possibility that cooling of the rotor becomes uneven.

More specifically, the oil is supplied to the in-shaft oil path from one side thereof. For this reason, one of the end plates is located on an upstream side thereof, and the other is located on a downstream side thereof. A centrifugal force acts on the rotating rotor. The centrifugal force also acts on the oil supplied to the in-shaft oil path. As a result, an amount of the oil that flows into the end plate on the upstream side of the in-shaft oil path becomes larger than an amount of the oil that flows into the end plate on the downstream side of the in-shaft oil path.

That is, depending on a position where the oil is introduced from the in-shaft oil path, the amount of the oil flowing through a refrigerant flow channel varies. As a result, there is the possibility that cooling of the rotor becomes uneven.

In view of the above, the present specification discloses a rotor cooling structure capable of cooling an entire rotor in a well-balanced manner by using rotation of the rotor.

### [Solution to Problem]

The disclosed technique relates to a rotor cooling structure of a rotary electric machine including: a shaft that is supported in a freely rotatable manner about a rotation shaft; a rotor attached around the shaft; and a stator arranged around the rotor via an air gap, and cooling the rotor by supplying a coolant to a passage in a specific shape.

The shaft has an in-shaft passage which extends in an axial direction and into which the coolant flows from one end portion thereof.

The rotor has: a first cooling passage into which the coolant is introduced from an upstream side of the in-shaft passage; and a second cooling passage into which the coolant is introduced from a downstream side of the in-shaft passage.

The first cooling passage has: a first introduction passage that extends radially outward through an upstream end portion of the rotor from the in-shaft passage; and a first main passage that communicates with a downstream side of the first introduction passage and extends in the axial direction through a main body portion of the rotor to a downstream end portion of the rotor.

The second cooling passage has: a second introduction passage that extends radially outward through the downstream end portion from the in-shaft passage; and a second main passage that communicates with a downstream side of the second introduction passage and extends in the axial direction through the main body portion to the upstream end portion.

The first introduction passage is provided with a first bent portion. The second introduction passage is provided with a second bent portion, wherein said first and second bent portions are bent or inclined in opposite rotation directions of the rotor so one of said first and second bent portions is bent in a forward rotation direction of the rotor and the other one of said first and second bent portions is bent in a reverse rotation direction of the rotor. More particularly, the first bent portion may be bent in a forward rotation direction of the rotor, whereas the second bent portion may be bent in a reverse rotation direction of the rotor.

That is, according to this rotor cooling structure, the rotor that integrally rotates with the shaft is provided with the passage in the specific shape for cooling by the supply of the coolant. The coolant flows into the in-shaft passage from the one end of the shaft. The coolant is introduced into the rotor through the first cooling passage from the upstream side of the in-shaft passage, and the coolant is introduced thereinto through the second cooling passage from the downstream side of the in-shaft passage.

Then, the first introduction passage, which is located on the upstream side of the first cooling passage and extends radially outward, is provided with the first bent portion bent in the forward rotation direction. The second introduction passage, which is located on the upstream side of the second cooling passage and extends radially outward, is provided with the first bent portion bent in the reverse rotation direction.

As described above, during rotation of the rotor, due to an influence of a centrifugal force generated by the rotation thereof, there is a difference in an amount of cooling oil between the upstream side and the downstream side of the in-shaft passage, that is, between the first cooling passage and the second cooling passage. To handle the above, the first introduction passage of the first cooling passage on the upstream side is provided with the first bent portion bent in the forward rotation direction. The second introduction passage of the second cooling passage on the downstream side is provided with the second bent portion bent in the reverse rotation direction.

The coolant flows into the first bent portion bent in the forward rotation direction against action of a Coriolis force. The flow of the coolant is restricted. On the contrary, the coolant flows into the second bent portion bent in the reverse rotation direction due to the action of the Coriolis force. The flow of the coolant is promoted. As a result, it is possible to suppress the difference in an introduction amount of the coolant, which occurs between the upstream side and the downstream side of the in-shaft passage. Thus, the entire rotor can be cooled in a well-balanced manner.

The first cooling passage may further have a first folded passage on a downstream side of the first main passage, the first folded passage extending in the axial direction through the main body portion to the upstream end portion and then extends in the axial direction to the downstream end portion such that the coolant flows out from the downstream end portion. The second cooling passage may further have a second folded passage on a downstream side of the second main passage, the second folded passage extending in the axial direction through the main body portion to the downstream end portion and then extends in the axial direction to the upstream end portion such that the coolant flows out from the upstream end portion.

In the case where there are three passages that extend in the axial direction, the amount of the coolant possibly becomes uneven when the coolant is separately supplied to these passages. Meanwhile, when these passages are formed as a series of passages that are folded and run back and forth for a one-and-a-half times, the amount of the coolant flowing through these passages can be made even. A cooling difference of the rotor that is caused by the difference in the amount of the coolant can be reduced.

The first cooling passage may further have a first folded passage on a downstream side of the first main passage, the first cooling passage extending in the axial direction through the main body portion to the upstream end portion such that the coolant flows out from the upstream end portion. The second cooling passage may further have a second folded passage on a downstream side of the second main passage, the second folded passage extending in the axial direction through the main body portion to the downstream end portion such that the coolant flows out from the downstream end portion.

In the case where there are two passages that extend in the axial direction, these passages may be formed as a series of passages that run back and forth once by folding these passages.

The first cooling passage may further have a first downstream relay passage that is interposed between the first main passage and the first folded passage, and the second cooling passage may further have a second upstream relay passage that is interposed between the second main passage and the second folded passage. The first downstream relay passage may be formed to be directed in the reverse rotation direction of the rotor, and the second upstream relay passage may be formed to be directed in the forward rotation direction of the rotor.

That is, when the passages are folded, the first downstream relay passage, which corresponds to a folded portion, in the first cooling passage may be formed to be directed in the reverse rotation direction, and the second upstream relay passage of the second cooling passage may be formed to be directed in the reverse rotation direction. In this way, overall shapes of the first cooling passage and the second cooling passage become relatively simple. Thus, they are easily processed.

In this case, the directions of these folded portions are not preferred in terms of the reduction of the difference in the amount of the coolant. However, the influence thereof is smaller thereon than on the first bent portion and the second bent portion. Therefore, it is possible to suppress the difference in the amount of the coolant between the first cooling passage and the second cooling passage as a whole.

The first cooling passage may further have a first downstream relay passage that is interposed between the first main passage and the first folded passage, and the second cooling passage may further have a second upstream relay passage that is interposed between the second main passage and the second folded passage. The first downstream relay passage may be formed to be directed in the forward rotation direction of the rotor, and the second upstream relay passage may be formed to be directed in the reverse rotation direction of the rotor.

In this case, the first downstream relay passage and the second upstream relay passage can promote the reduction of the difference in the amount of the coolant caused by the Coriolis force. It is possible to further effectively reduce the difference in the amount of the coolant flowing through the first cooling passage and the second cooling passage.

Each of the first cooling passage and the second cooling passage may further have a liquid outlet passage which extends radially inward through the upstream end portion or the downstream end portion and from which the coolant flows out.

Since the coolant flows out from a radially inner side, it is possible to suppress excessive acceleration of the coolant caused by the action of the centrifugal force. In this way, it is possible to further effectively reduce the difference in the amount of the coolant flowing through the first cooling passage and the second cooling passage.

The rotor may further have: a rotor core that includes plural permanent magnets arranged such that magnetic poles are arranged in a circumferential direction and that constitutes the main body portion; and paired end plates that are in close contact with both end surfaces facing the axial direction of the rotor core and respectively constitute the upstream end portion and the downstream end portion. On an inner surface of each of the end plates, a groove portion constituting the passage may be formed in a plane-symmetrical shape, and the end plates may be used in common.

In this way, the number of components and cost for components can be cut. There is no need to handle the end plates separately during assembly. Assembly workability can also be improved.

### [Advantageous Effects of Invention]

According to the disclosed technique, the entire rotor can be cooled in a well-balanced manner. Therefore, performance of the rotary electric machine can be improved.

### [Brief Description of Drawings]

[FIG. 1] FIG. 1 is a schematic view illustrating an example of a rotary electric machine to which the disclosed technique is applied.
[FIG. 2] FIG. 2 is a view illustrating a rotor structure.
[FIG. 3] FIG. 3 is a schematic cross-sectional view that is taken along a direction indicated by an arrow A1-A1 in FIG. 2.
[FIG. 4A] FIG. 4A is a simplified view of a passage shape before application of the disclosed technique.
[FIG. 4B] FIG. 4B is a simplified view of a passage shape after the application of the disclosed technique.
[FIG. 5A] FIG. 5A is a schematic perspective view illustrating a passage in a first example three-dimensionally.
[FIG. 5B] FIG. 5B is a schematic perspective view illustrating a correspondence relationship between the passage in a partially enlarged view of FIG. 5A and a groove portion of an end plate.
[FIG. 6A] FIG. 6A is a schematic perspective view illustrating a passage in a second example three-dimensionally.
[FIG. 6B] FIG. 6B is a schematic perspective view illustrating a correspondence relationship between a passage in a partially enlarged view of FIG. 6A and a groove portion of an end plate.
[FIG. 7A] FIG. 7A is a schematic perspective view illustrating a passage in a third example three-dimensionally.
[FIG. 7B] FIG. 7B is a schematic perspective view illustrating a correspondence relationship between a passage in a partially enlarged view of FIG. 7A and a groove portion of an end plate.

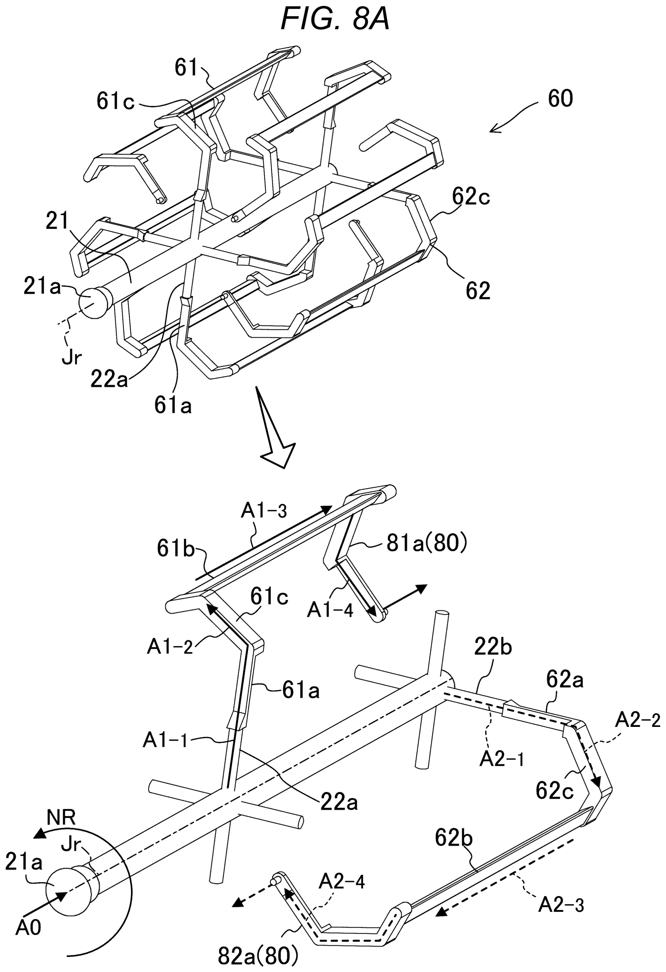

[FIG. 8A] FIG. 8A is a schematic perspective view illustrating a passage in a fourth example three-dimensionally.

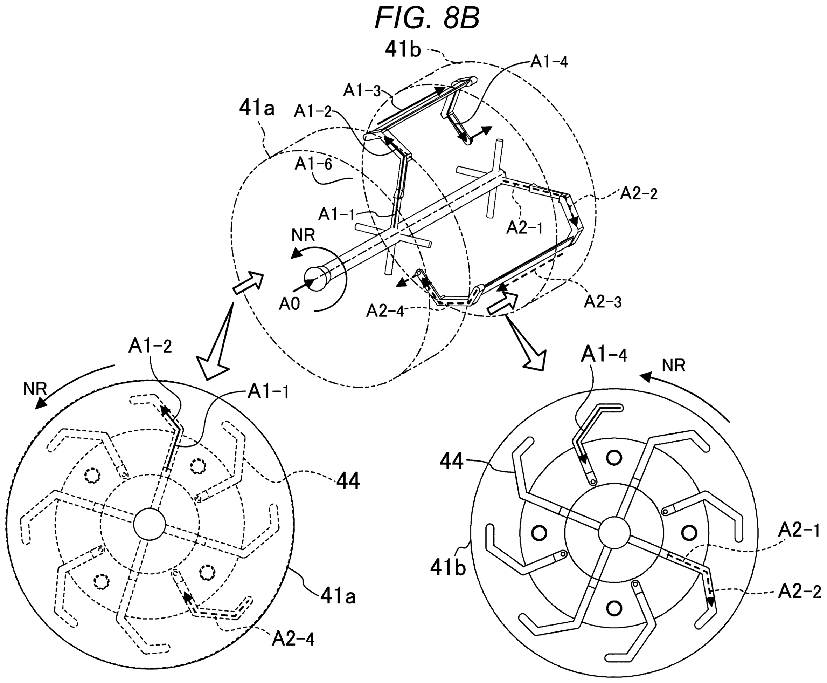

[FIG. 8B] FIG. 8B is a schematic perspective view illustrating a correspondence relationship between a passage in a partially enlarged view of FIG. 8A and a groove portion of an end plate.

### [Description of Embodiments]

Hereinafter, a technique disclosed by an embodiment will be described. However, the following description is merely illustrative in nature. In the description, a direction in which a rotation axis Jr extends is defined as an axial direction, a direction around the rotation axis Jr is defined as a circumferential direction, and a direction of a radius centered on the rotation axis Jr is defined as a radial direction. An upstream side and a downstream side are defined on the basis of a direction in which a coolant flows.

### <Overall Structure of Rotary Electric Machine>

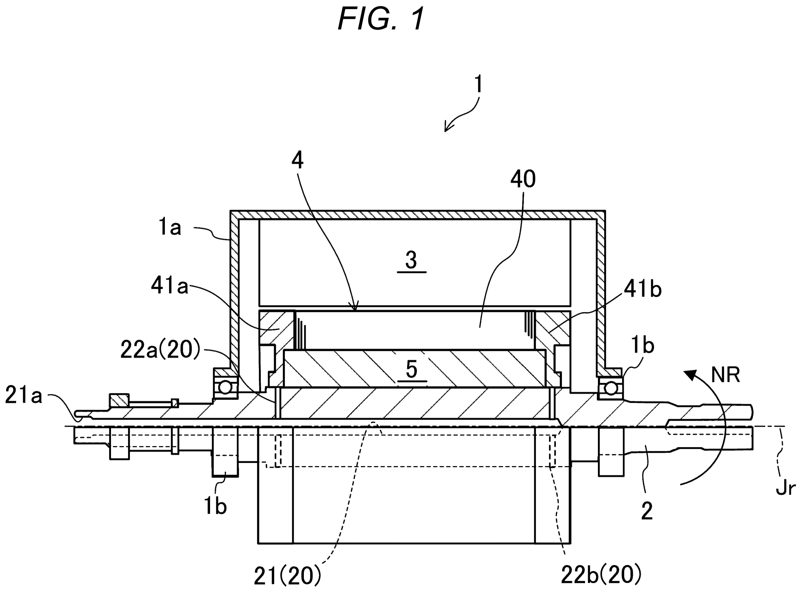

FIG. 1 illustrates an example of a rotary electric machine to which the disclosed technique is applied. The illustrated rotary electric machine is a drive motor 1 that is mounted on an automobile. A driving range thereof is wide. For example, high torque output is required even for low rotation during low-speed driving, and high rotation (for example, 7000 rpm or higher) output is required even for the low torque during high-speed driving.

In addition, the automobile not only travels forward but also travels reversely, so-called backward. In this case, the motor 1 may rotate reversely at a low rotational frequency. Furthermore, during deceleration of the automobile, regenerative processing, in which kinetic energy consumed during braking is recovered as electric energy, is often executed. In such a case, the motor 1 is also used as a generator.

Accordingly, this motor 1 is required to generate stable and large output in the wide driving range that corresponds to various driving situations.

The motor 1 includes a shaft 2, a stator 3, a rotor 4, and the like. In a case of this motor 1, the stator 3 and the rotor 4 are accommodated in a hollow cylindrical motor case 1a.

The shaft 2 is supported by the motor case 1a via a pair of bearings 1b, 1b. In this way, the shaft 2 is freely rotatable about the rotation axis Jr. An in-shaft passage 20 is formed inside the shaft 2. Oil for cooling the rotor (hereinafter referred to as cooling oil, an example of the coolant) flows into this in-shaft passage 20.

The in-shaft passage 20 has an in-shaft main passage 21 and a pair of in-shaft branch passages (a first in-shaft branch passage 22a and a second in-shaft branch passage 22b). The in-shaft main passage 21 extends in the axial direction through a central portion of the shaft 2. The in-shaft main passage 21 has an inflow port 21a that is opened in one end portion of the shaft 2. The cooling oil flows into the in-shaft passage 20 from this inflow port 21a. The other end portion (a distal end) of the in-shaft main passage 21 is located in the shaft 2 (a dead end).

The first in-shaft branch passage 22a extends outward or radially outward from the upstream side of the in-shaft main passage 21. The four first in-shaft branch passages 22a are provided. Those are arranged around the in-shaft main passage 21 at 90-degree intervals. The second in-shaft branch passage 22b extends radially outward from the downstream side of the in-shaft main passage 21 (more specifically, a distal end portion of the in-shaft main passage 21). The four second in-shaft branch passages 22b are also provided, and those are arranged around the in-shaft main passage 21 at 90-degree intervals. The first in-shaft branch passages 22a and the second in-shaft branch passages 22b are arranged in the circumferential direction in a manner to intersect each other at 45-degree intervals.

The rotor 4 is formed of a substantially cylindrical member, and has: a substantially cylindrical rotor core 40 (which constitutes a main body portion); and paired substantially disk-shaped end plates 41a, 41b (which respectively constitute an upstream end portion and a downstream end portion) that are assembled to both sides thereof in the axial direction. The rotor 4 is attached around an intermediate portion of the shaft 2 in the axial direction.

The rotor core 40 is attached to the shaft 2 via a support member 5. The end plates 41a, 41b are attached to the shaft 2 in a state of being in close contact with both end surfaces of the rotor core 40 and the support member 5 in the axial direction. For this reason, the rotor 4 rotates with the shaft 2. In a case of this motor 1, driving thereof is controlled in response to driving of the automobile.

In regard to a rotation direction of the shaft 2 and the rotor 4, a counterclockwise direction is a forward rotation direction that corresponds to the forward travel of the automobile when seen from the inflow port 21a side. Accordingly, when the automobile travels reversely, the shaft 2 and the rotor 4 rotate in a reverse rotation direction that is opposite thereto. In the drawings, the forward rotation direction is indicated by an arrow NR.

The stator 3 is formed in a substantially cylindrical shape by plural parts. Although not illustrated, the stator 3 includes a stator core, plural coils, and the like. The stator 3 is attached to an inner circumferential surface of the motor case 1a. The stator 3 is arranged around the rotor 4 via an air gap.

In a case of this motor 1, the plural coils constitute a three-phase coil group. The motor 1 is controlled such that an alternating current flows into the coil group of each phase at a different phase. As a result, the shaft 2 and the rotor 4 rotate.

### (Specific Structure of Rotor)

As described above, the rotor 4 includes: the rotor core 40 that constitutes the main body portion; and the paired end plates 41a, 41b that constitute the upstream end portion and the downstream end portion, respectively. Hereinafter, the end plates 41a, 41b that constitute the upstream end portion will also be referred to as a first end plate 41a, and the end plate 41 that constitutes the downstream end portion will also be referred to as a second end plate 41b.

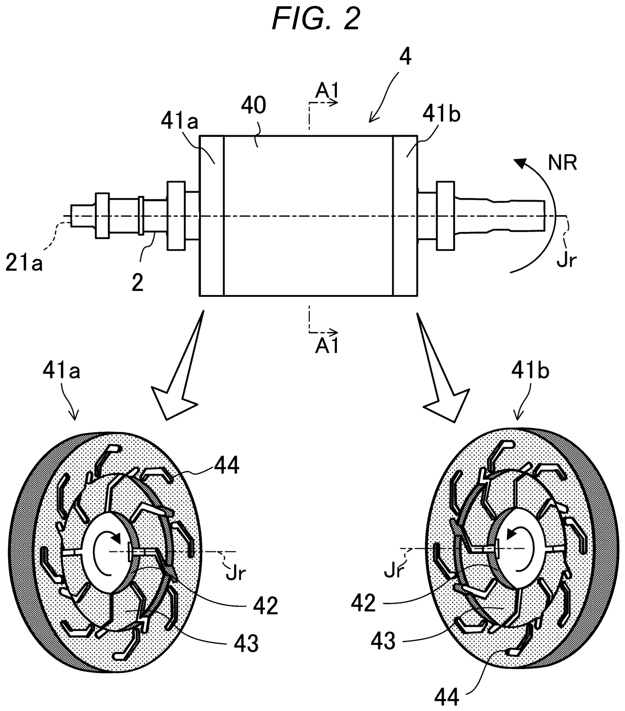

As illustrated in FIG. 2, a shaft hole 42, into which the shaft 2 is inserted, is opened in a central portion of each of these first end plate 41a and second end plate 41b. On an inner surface of each of the first end plate 41a and the second end plate 41b, a concave portion 43 is formed around the shaft hole 42 to receive an end portion of the support member 5. The inner surfaces of the first end plate 41a and the second end plate 41b are in close contact with the end surfaces of the rotor core 40 and the support member 5.

In addition, the inner surface of each of these first end plate 41a and second end plate 41b is formed with plural groove portions 44 in predetermined shapes. These groove portions 44 constitute parts of a passage 60 in a specific shape, which will be described below and through which the cooling oil flows.

In this motor 1, these first end plate 41a and second end plate 41b can be used in common. That is, the plural groove portions 44 are formed in plane-symmetrical shapes. More specifically, the plural groove portions 44 are formed to be the same when each of the inner surfaces of the first end plate 41a and the second end plate 41b is seen from an axially inner side.

In this way, the number of components and cost for components can be cut. There is no need to separately handle the first end plate 41a and the second end plate 41b at the time of assembly. Assembly workability can also be improved.

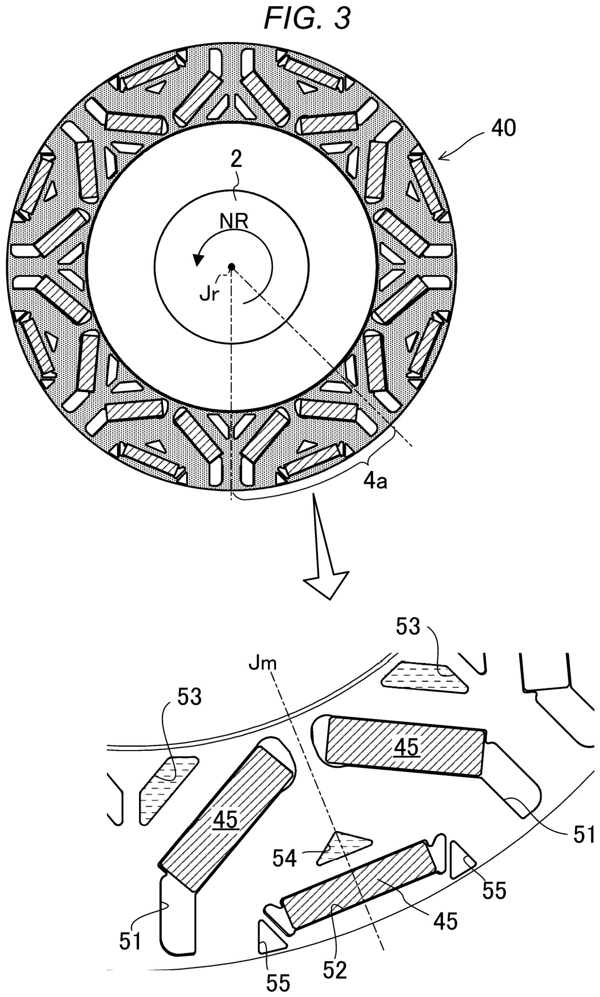

FIG. 3 is a schematic cross-sectional view that is taken along a direction indicated by an arrow A1-A1 in FIG. 2. The rotor core 40 is formed by stacking annular steel plates in the axial direction. The rotor core 40 is formed with plural voids, each of which penetrates in the axial direction.

These voids constitute eight void groups that have an identical pattern and are arranged at equally-spaced intervals in the circumferential direction. In FIG. 3, the single void group is enlarged. Each of the void groups includes a pair of first voids 51, 51, a single second void 52, a pair of third voids 53, 53, a single fourth void 54, and a pair of fifth voids 55, 55. These voids are arranged symmetrically to a magnetic pole line Jm that passes through a center of the void group.

Each of the void groups constitutes a magnetic pole portion 4a of the rotor 4. That is, a first permanent magnet 45 is fitted into each of the first voids 51. A second permanent magnet 45 is fitted into the second void 52. These first and second permanent magnets 45 are installed in the rotor core 40 in a manner to extend in the axial direction. In an outer circumferential portion of the rotor 4, these first and second permanent magnets 45 constitute the eight magnetic pole portions 4a in which S poles and N poles are alternately arranged in the circumferential direction in a state where magnetic poles are directed radially outward.

Each of the third voids 53 is arranged adjacent to respective one of the first permanent magnets 45. The fourth void 54 is arranged adjacent to the first permanent magnets 45. These third void 53 and fourth void 54 constitute the passage 60 through which the cooling oil flows.

The pair of the fifth voids 55, 55 and gaps that remain in the first voids 51 and the second void 52 constitute a flux barrier that suppresses leakage flux. The number, arrangement, and the like of the voids and the permanent magnets 45 are designed according to specifications of the motor 1. Thus, these constitute merely one example.

### <Rotor Cooling Structure>

As described above, the drive motor 1 is required to generate large output in a wide driving range. The large alternating current flows into the coil group of each phase. In addition, depending on a driving scene, driving thereof continues for a long time. Consequently, the stator 3 and the rotor 4 generate heat due to copper loss or iron loss. Thus, temperatures of the stator 3 and the rotor 4 tend to become high.

Meanwhile, when a temperature of the permanent magnet 45 becomes high, a magnetic force thereof is reduced due to demagnetization action. Thus, cooling of the rotor 4 is important in order to prevent a reduction in the magnetic force of the permanent magnet 45. In view of the above, as means for cooling the rotor 4, it is considered to provide the passage 60 in the rotor 4 and supply the cooling oil to the passage 60.

In the disclosed technique, a shape of this passage 60 is devised. First, a description will be made on the shape of the passage 60 before application of the disclosed technique. Then, the shape of the passage 60 after the application of the disclosed technique will be described.

### (Before Application of Disclosed Technique)

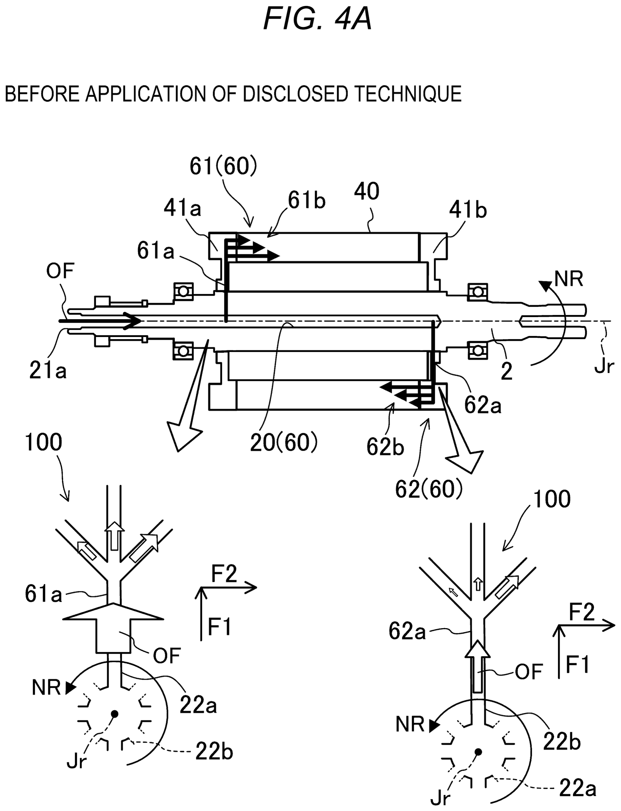

FIG. 4A illustrates the shape of the passage 60 before the application of the disclosed technique in a simplified manner. The rotor 4 is provided with the two passages 60 into each of which the cooling oil is introduced from the shaft 2.

More specifically, a passage (a first cooling passage 61) to which the cooling oil is introduced from the upstream side of the in-shaft passage 20, that is, the first in-shaft branch passage 22a, and a passage (a second cooling passage 62) to which the cooling oil is introduced from the downstream side of the in-shaft passage 20, that is, the second in-shaft branch passage 22b are provided.

Four each of the first cooling passages 61 and the second cooling passages 62 are provided in a manner to correspond to the first in-shaft branch passages 22a and the second in-shaft branch passages 22b, respectively. Since they have the same shape, one of them will be described. Here, arrows OF each indicate a flow of the cooling oil.

The first cooling passage 61 includes: a first introduction passage 61a that extends radially outward through the first end plate 41a from the in-shaft passage 20; and a first main passage 61b that communicates with the downstream side of the first introduction passage 61a and extends through the rotor core 40 in the axial direction to the second end plate 41b.

The second cooling passage 62 includes: a second introduction passage 62a that extends radially outward through the second end plate 41b from the in-shaft passage 20; and a second main passage 62b that communicates with the downstream side of the second introduction passage 62a and extends through the rotor core 40 in the axial direction to the first end plate 41a.

In the first cooling passage 61 and the second cooling passage 62 before the application of the disclosed technique, the downstream side of each of the first introduction passage 61a and the second introduction passage 62a was divided into the three passages 60 (branched cooling passages 100). Then, a set of the first main passages 61b and a set of the second main passages 62b are each formed by the separate three passages 60 in a manner to correspond to the three passages 60 in each of the magnetic pole portions 4a. Thus, it was configured that the cooling oil flew into each of the first main passages 61b and the second main passages 62b through the branched cooling passages 100.

However, in such a case, it was found that amounts of the cooling oil flowing into the first cooling passage 61 and the second cooling passage 62 differed, which made it impossible to cool the entire rotor 4 evenly.

First, due to an influence of a centrifugal force F1 generated by the rotation of the rotor 4, the amount of the cooling oil that can be introduced into the rotor 4 differs between the upstream side and the downstream side of the in-shaft passage 20.

That is, the cooling oil that flows into the in-shaft passage 20 is urged radially outward due to action of the centrifugal force F1. As a result, the cooling oil is more likely to flow into the first in-shaft branch passage 22a, which is passed first, and a large amount thereof is introduced into the first in-shaft branch passage 22a. As the rotational frequency is increased, the centrifugal force F1 is increased. Consequently, the introduction amount into the first in-shaft branch passage 22a is also increased.

As a result, the amount of the cooling oil that reaches the downstream side of the in-shaft passage 20 is reduced. The introduction amount into the second in-shaft branch passage 22b is also reduced.

Such a difference in the amount of the cooling oil does not occur when the entire in-shaft passage 20 can be always filled with the cooling oil irrespective of the rotational frequency of the rotor 4. However, the amount of the cooling oil that can be supplied to the motor 1 per unit time is limited. In a case of the drive motor 1 that rotates at the high rotational frequency, it is realistically difficult to constantly supply the cooling oil until the entire in-shaft passage 20 can be filled with the cooling oil. Accordingly, due to the influence of the centrifugal force F1 generated by the rotation of the rotor 4, the amount of the cooling oil that can be introduced into the rotor 4 differs between the upstream side and the downstream side of the in-shaft passage 20.

Secondly, due to an influence of a Coriolis force F2 generated by the rotation of the rotor 4, the amount of the cooling oil that can be introduced into the branched cooling passages 100 differs between a forward side and a backward side in the rotation direction.

That is, the cooling oil that flows into each of the first in-shaft branch passage 22a and the second in-shaft branch passage 22b and flows radially outward is urged to the backward side in the rotation direction due to action of the Coriolis force F2. This generates the difference in the amount of the cooling oil that can be introduced into the branched cooling passages 100 depending on branched positions thereof in the circumferential direction.

Due to the influence of the forces that act on the cooling oil by the rotation of the rotor 4, the supply of the cooling oil varies, and the entire rotor 4 cannot be cooled in a well-balanced manner. As a result, cooling of the permanent magnet 45 varies. This may degrade motor performance.

### (After Application of Disclosed Technique)

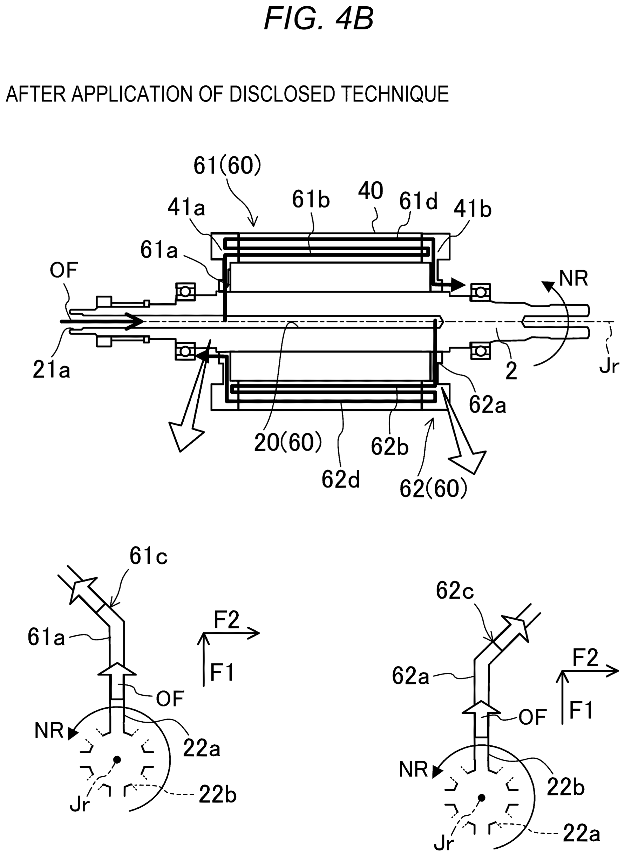

FIG. 4B illustrates the shape of the passage 60 after the application of the disclosed technique in a simplified manner. The provision of the first cooling passage 61 and the second cooling passage 62 in the rotor 4 is the same as that before the application. The passage 60 after the application of the disclosed technique differs by the following two points.

First, the first introduction passage 61a is provided with a first bent portion 61c that is bent in the forward rotation direction of the rotor 4, and the second introduction passage 62a is provided with a second bent portion 62c that is bent in the reverse rotation direction of the rotor 4.

More specifically, the first introduction passage 61a is bent at an acute angle in the forward rotation direction in the middle of the first introduction passage 61a, and thereby the first bent portion 61c is provided. Similarly, the second introduction passage 62a is bent at an acute angle in the reverse rotation direction in the middle of the second introduction passage 62a, and thereby the second bent portion 62c is provided.

The cooling oil flows into the first bent portion 61c, which is bent in the forward rotation direction, against the action of the Coriolis force F2. The flow of the cooling oil is restricted. On the contrary, the cooling oil flows into the second bent portion 62c, which is bent in the reverse rotation direction, due to the action of the Coriolis force F2. The flow of the cooling oil is promoted. As a result, it is possible to suppress the difference in the amount of the cooling oil introduced into the rotor, which occurs between the upstream side and the downstream side of the in-shaft passage 20.

Here, bent positions, a way of bending, and the like of the first bent portion 61c and the second bent portion 62c are adjustable. For example, the first introduction passage 61a or the like may be bent from a base end portion thereof, or may be curved instead of being bent.

Secondly, the plural passages 60, which constitute the first main passage 61b and the second main passage 62b, constitute the single passage 60 that continues sequentially. The first main passage 61b and the second main passage 62b in this embodiment are each formed by the passage 60 that runs through the rotor core 40 back and forth for one-and-a-half times by turning in the axial direction in a manner to correspond to the three passages 60 in each of the magnetic pole portions 4a.

More specifically, the first cooling passage 61 in this embodiment further includes a first folded passage 61d on the downstream side of the first main passage 61b, which extends through the rotor core 40 in the axial direction from the first end plate 41a to the second end plate 41b. The first folded passage 61d extends through the rotor core 40 in the axial direction to the first end plate 41a, and then extends in the axial direction to the second end plate 41b such that the coolant flows out from the second end plate 41b.

Similarly, the second cooling passage 62 further includes a second folded passage 62d on the downstream side of the second main passage 62b, which extends through the rotor core 40 in the axial direction from the second end plate 41b to the first end plate 41a. The second folded passage 62d extends through the rotor core 40 in the axial direction to the second end plate 41b, and then extends in the axial direction to the first end plate 41a such that the coolant flows out from the first end plate 41a.

There is no longer the difference in the amount of the cooling oil flowing through the passages 60 by forming the plural passages 60 in each of the magnetic pole portion 4a as a series of these passages 60. A cooling difference that is caused by the difference in the amount of the cooling oil can be reduced. A total length of the passage 60 is extended, and flow path resistance is increased. An influence of the flow path resistance becomes more significant as a flow rate is increased. As a result, it is possible to suppress the difference in the amount of the cooling oil introduced into the rotor, which occurs between the upstream side and the downstream side of the in-shaft passage 20.

With the combination of these passages 60 in the specific shapes, it is possible to effectively reduce the difference in the amount of the cooling oil flowing through the first cooling passage 61 and the second cooling passage 62. The entire rotor 4 can be cooled in the well-balanced manner. As a result, the cooling difference among the permanent magnets 45 is also reduced, and thus degradation of the motor performance can be suppressed.

### <First Example>

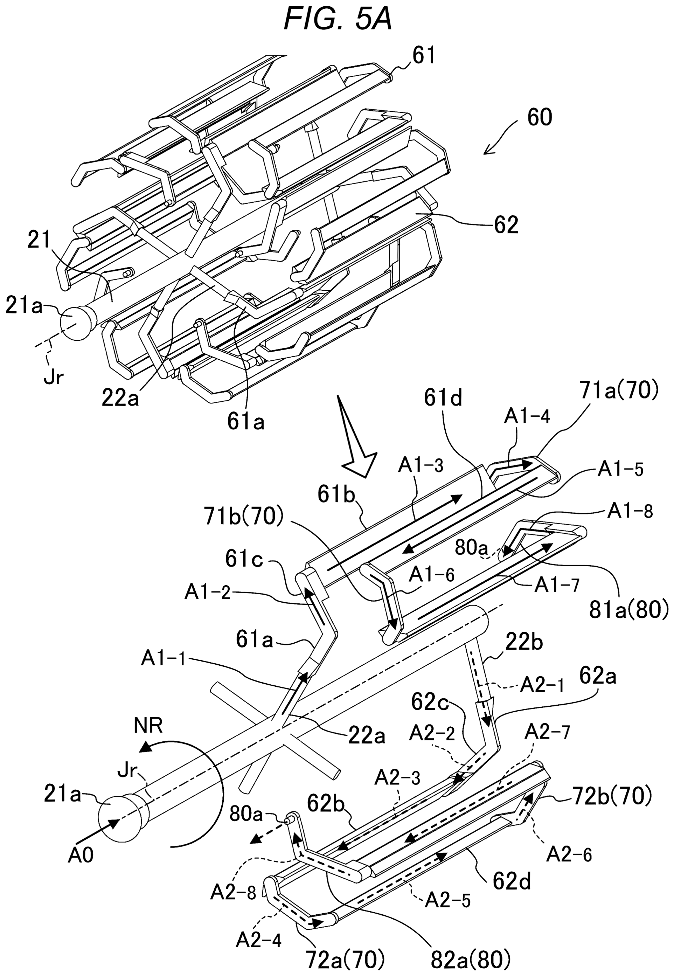

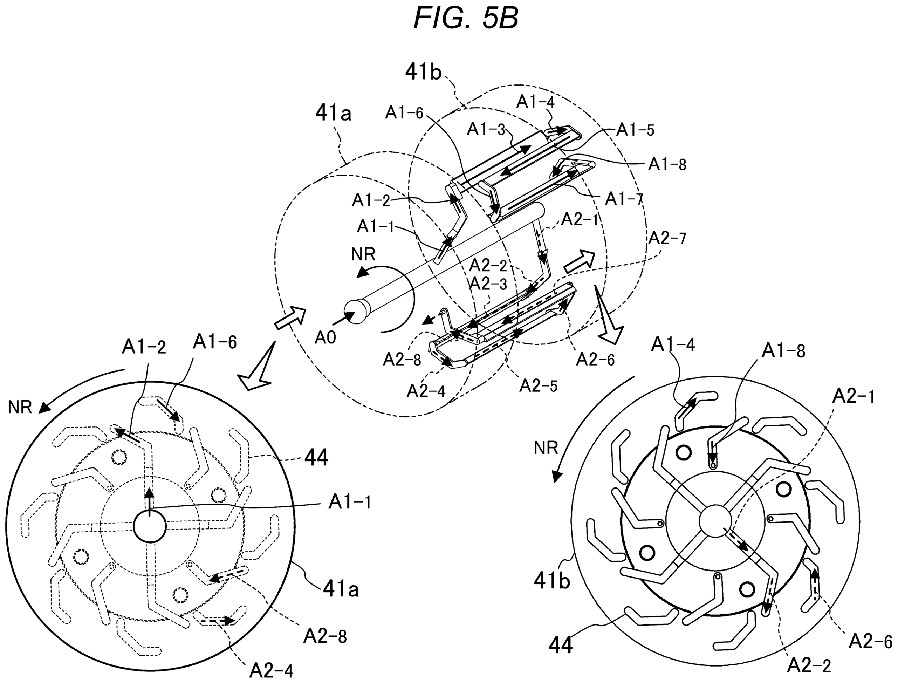

FIG. 5A and FIG. 5B illustrate a specific example of the embodiment described above. FIG. 5A is a schematic perspective view illustrating the passage 60 in the specific shape, through which the cooling oil flows, three-dimensionally. An upper view is an overall view of the passage 60. A lower view is a partially enlarged view illustrating each one of the four first cooling passages 61 and the four second cooling passages 62 by omitting the other three.

FIG. 5B is a schematic perspective view illustrating a correspondence relationship between the passage 60 in the partial enlarged view of FIG. 5A and the groove portions 44 that are formed in the inner surface of each of the first end plate 41a and the second end plate 41b. The groove portions 44 of the second end plate 41b are seen from the inner surface side thereof while the groove portions 44 of the first end plate 41a are seen from the outer surface side thereof such that the rotation directions coincide with each other.

In these drawings, solid arrows A1 each indicate a flow direction of the cooling oil in the first cooling passage 61. Broken arrows A2 each indicate a flow direction of the cooling oil in the second cooling passage 62. "-1" and the like added to A1 and the like indicate an order of the flow. For example, A1-2 indicates a flow following A1-1.

As indicated by an arrow A0, the cooling oil flows into the in-shaft passage 20 (the in-shaft main passage 21) from the inflow port 21a.

As indicated by an arrow A1-1, the cooling oil flows into the first introduction passage 61a of the first cooling passage 61 through the first in-shaft branch passage 22a. Then, as indicated by an arrow A1-2, it flows into the first bent portion 61c. At this time, the flow of the cooling oil is bent in the forward rotation direction. It flows against the Coriolis force F2, and the flow of the cooling oil is thereby restricted.

Thereafter, the cooling oil flows into the first main passage 61b (one of the third voids 53 in the predetermined magnetic pole portion 4a) from the downstream side of the first introduction passage 61a. As indicated by an arrow A1-3, the cooling oil flows in the axial direction through a portion of the rotor core 40 adjacent to the first permanent magnet 45, and reaches the second end plate 41b.

Meanwhile, as indicated by an arrow A2-1, the cooling oil flows into the second introduction passage 62a of the second cooling passage 62 through the second in-shaft branch passage 22b. Then, as indicated by an arrow A2-2, it flows into the second bent portion 62c. At this time, the flow of the cooling oil is bent in the reverse rotation direction. The cooling oil flows by following the Coriolis force F2, and the flow thereof is thereby promoted.

Thereafter, the cooling oil flows into the second main passage 62b (one of the third voids 53 in the predetermined magnetic pole portion 4a) from the downstream side of the second introduction passage 62a. As indicated by an arrow A2-3, the cooling oil flows in the axial direction through a portion of the rotor core 40 adjacent to the first permanent magnet 45, and reaches the first end plate 41a.

The first end plate 41a and the second end plate 41b are each provided with a relay passage 70 that extends radially in a predetermined shape to fold back the passage 60.

More specifically, the first cooling passage 61 includes a first downstream relay passage 71a that is interposed between the first main passage 61b and the first folded passage 61d. The first folded passage 61d has a first upstream relay passage 71b in a folded portion thereof.

Similarly, the second cooling passage 62 includes a second upstream relay passage 72a that is interposed between the second main passage 62b and the second folded passage 62d. The second folded passage 62d has a second downstream relay passage 72b in a folded portion thereof.

In this first example, the first downstream relay passage 71a and the first upstream relay passage 71b (see arrows Al-4, A1-6) are formed to be directed in the reverse rotation direction. The second upstream relay passage 72a and the second downstream relay passage 72b (see arrows A2-4, A2-6) are formed to be directed in the forward rotation direction.

The cooling oil that flows through the first downstream relay passage 71a and the first upstream relay passage 71b flows by following the Coriolis force F2, and thus easily flows. Meanwhile, the cooling oil that flows through the second upstream relay passage 72a and the second downstream relay passage 72b flows against the Coriolis force F2, and thus is difficult to flow.

This is not preferred from a viewpoint of a desire to suppress the flow of the cooling oil in the first cooling passage 61 while promoting the flow of the cooling oil in the second cooling passage 62. However, these passages 60 are located on the downstream side of the first cooling passage 61 and the second cooling passage 62. Thus, an influence of the action on them is less significant than that on the first bent portion 61c and the second bent portion 62c located on the most upstream side. Therefore, it is possible to suppress the difference in the amount of the cooling oil between the first cooling passage 61 and the second cooling passage 62 as a whole.

In contrast, by adopting such shapes, the overall shapes of the first cooling passage 61 and the second cooling passage 62 become relatively simple. Thus, they are easily processed. Manufacturability thereof is excellent.

As indicated by the arrow A1-4, the cooling oil that has flowed through the first main passage 61b flows through the first downstream relay passage 71a and flows into the first folded passage 61d. The first folded passage 61d has an upstream portion formed by the fourth void 54, and extends in the axial direction through the rotor core 40 from the second end plate 41b to the first end plate 41a. Accordingly, as indicated by an arrow A1-5, the cooling oil flows through a portion of the rotor core 40 adjacent to the second permanent magnet 45, and reaches the first end plate 41a.

Then, as indicated by the arrow A1-6, it flows through the first upstream relay passage 71b and flows into a downstream portion of the first folded passage 61d. The first folded passage 61d has the downstream portion formed by the other third void 53 in the predetermined magnetic pole portion 4a, and extends in the axial direction through the rotor core 40 from the first end plate 41a to the second end plate 41b. Accordingly, as indicated by an arrow A1-7, the cooling oil flows through the portion of the rotor core 40 adjacent to the first permanent magnet 45, and reaches the second end plate 41b.

Similarly, as indicated by the arrow A2-4, the cooling oil that has flowed through the second main passage 62b flows through the second upstream relay passage 72a and flows into the second folded passage 62d. The second folded passage 62d has an upstream portion formed by the fourth void 54, and extends in the axial direction through the rotor core 40 from the first end plate 41a to the second end plate 41b. Accordingly, as indicated by an arrow A2-5, the cooling oil flows through a portion of the rotor core 40 adjacent to the second permanent magnet 45, and reaches the second end plate 41b.

Then, as indicated by the arrow A2-6, it flows through the second downstream relay passage 72b and flows into a downstream portion of the second folded passage 62d. The second folded passage 62d has the downstream portion formed by the other third void 53 in the predetermined magnetic pole portion 4a, and extends in the axial direction through the rotor core 40 from the second end plate 41b to the first end plate 41a. Accordingly, as indicated by an arrow A2-7, the cooling oil flows through a portion of the rotor core 40 adjacent to the first permanent magnet 45, and reaches the first end plate 41a.

The first end plate 41a and the second end plate 41b are each provided with a liquid outlet passage 80 for causing the cooling oil to flow out from the motor 1.

More specifically, the first cooling passage 61 has a first downstream liquid outlet passage 81a that continues from the downstream side of the first folded passage 61d and extends radially inward in the second end plate 41b. The second cooling passage 62 has a second upstream liquid outlet passage 82a that continues from the downstream side of the second folded passage 62d and extends radially inward in the first end plate 41a. An outflow port 80a that is opened in the axial direction is formed in a downstream end portion of each of the first downstream liquid outlet passage and the second upstream liquid outlet passage.

With arrangement of the outflow port 80a on the radially inward side, it is possible to suppress excessive acceleration of the cooling oil caused by the action of the centrifugal force F1. In this way, it is possible to further effectively reduce the difference in the amount of the cooling oil flowing through the first cooling passage 61 and the second cooling passage 62. The entire rotor 4 can be cooled in the further well-balanced manner.

As indicated by an arrow A1-8, the cooling oil that has flowed through the first folded passage 61d flows through the first downstream liquid outlet passage 81a, then flows in the axial direction from the outflow port 80a, and flows out from the second end plate 41b. Similarly, as indicated by an arrow A2-8, the cooling oil that has flowed through the second folded passage 62d flows through the second upstream liquid outlet passage 82a, then flows in the axial direction from the outflow port 80a, and flows out from the first end plate 41a.

### <Second Example>

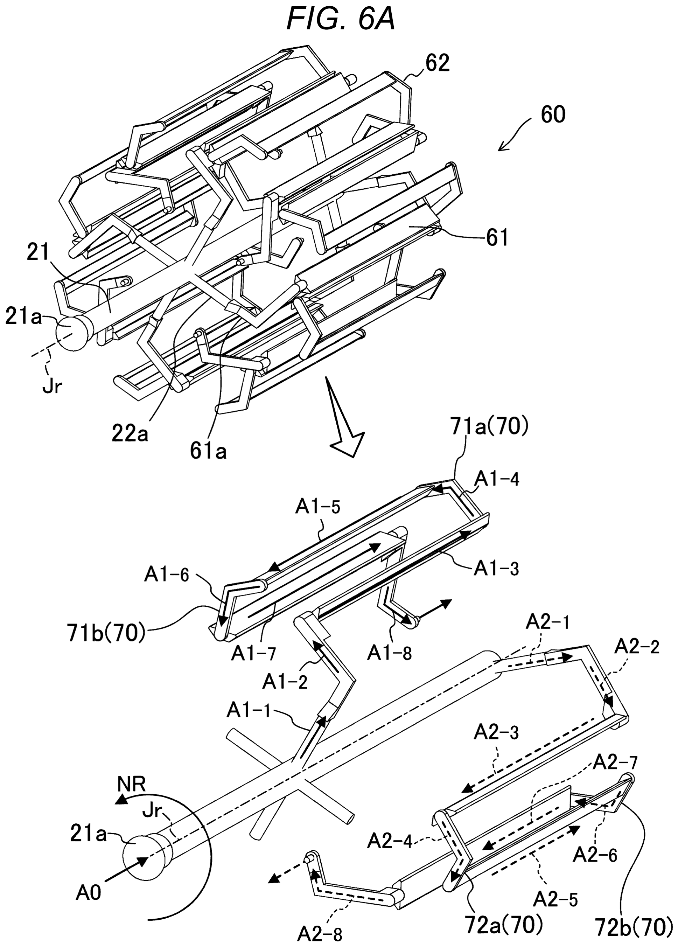

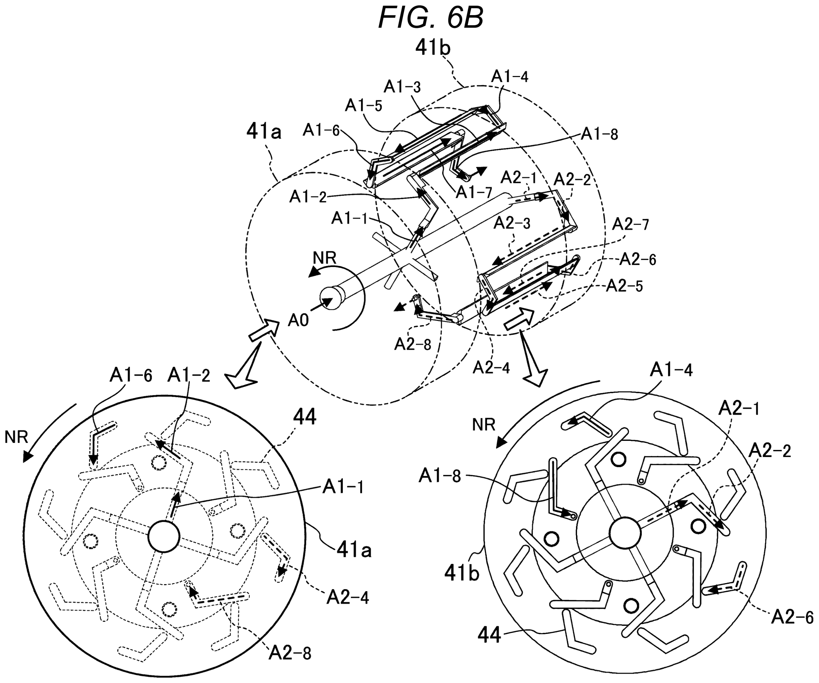

FIG. 6A and FIG. 6B illustrate another example of the embodiment described above. FIG. 6A is a schematic perspective view corresponding to FIG. 5A. FIG. 6B is a schematic perspective view corresponding to FIG. 5B. Reference signs of arrows in the drawings also correspond to those in FIG. 5A and the like (the same applies to a third example and the like below).

The basic configurations of the passage 60 in the second example, such as the first cooling passage 61 and the second cooling passage 62, are the same as those of the passage 60 in the first example. Accordingly, for the sake of convenience, while the arrows indicating the flow of the cooling oil are illustrated, the description of the same configuration including the reference signs are simplified or omitted, and different configurations are described.

In the second example, the direction of the relay passages 70 differs from that in the first example.

In the second example, the first downstream relay passage 71a and the first upstream relay passage 71b are formed to be directed in the forward rotation direction. The second upstream relay passage 72a and the second downstream relay passage 72b are formed to be directed in the reverse rotation direction.

The cooling oil that flows through the first downstream relay passage 71a and the first upstream relay passage 71b flows against the Coriolis force F2, and thus is difficult to flow. Meanwhile, the cooling oil that flows through the second upstream relay passage 72a and the second downstream relay passage 72b flows by following the Coriolis force F2, and thus easily flows.

This is preferred from the viewpoint of the desire to suppress the flow of the cooling oil in the first cooling passage 61 while promoting the flow of the cooling oil in the second cooling passage 62. In the second example, the flow of the cooling oil in the first cooling passage 61 can further be suppressed. The flow of the cooling oil in the second cooling passage 62 can further be promoted. In this way, it is possible to further effectively reduce the difference in the amount of the cooling oil flowing through the first cooling passage 61 and the second cooling passage 62. The entire rotor 4 can be cooled in the further well-balanced manner.

However, by adopting such shapes, the overall shapes of the first cooling passage 61 and the second cooling passage 62 become relatively complicated. Thus, the passage 60 in the second example is inferior to that in the first example in terms of the manufacturability.

### <Third Example>

In the embodiment described above, the first cooling passage 61 and the second cooling passage 62 are each formed to run through the rotor core 40 back and forth for one-and-a-half times in the manner to correspond to the three passages 60, each of which extends through the rotor core 40 in the axial direction.

However, depending on the specifications of the motor 1, such a case is also considered that the first cooling passage 61 and the second cooling passage 62 each run through the rotor core 40 back and forth once.

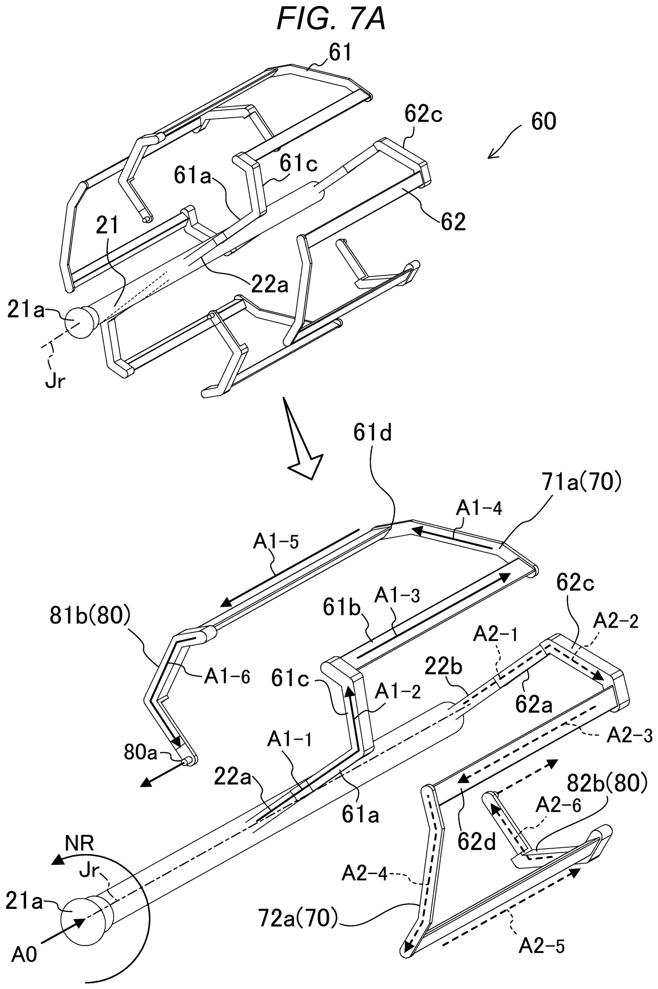

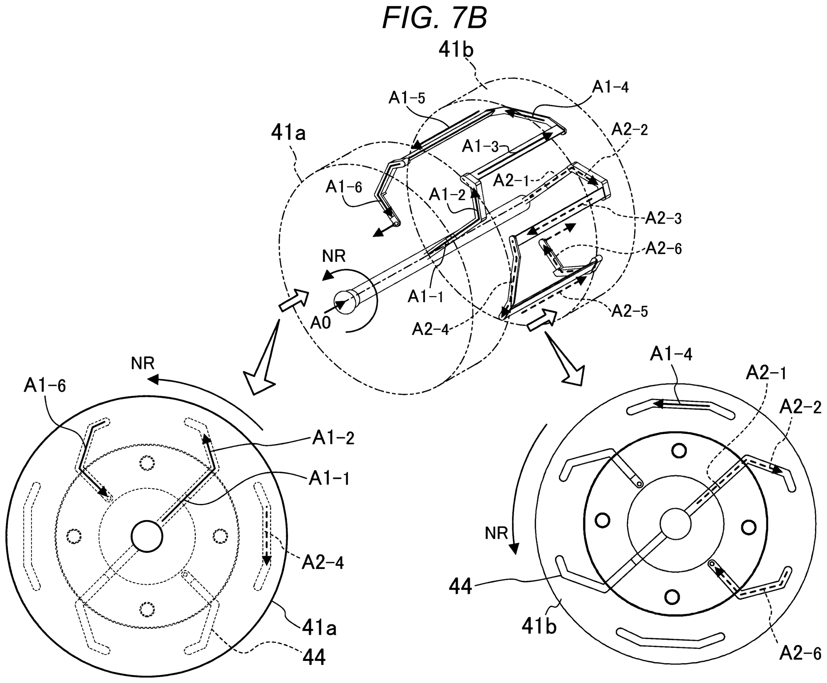

FIG. 7A and FIG. 7B illustrate an example of the passage 60 in such a case. The eight passages 60, each of which extends in the axial direction, are arranged in the illustrated rotor core 40. In a manner to correspond thereto, two each of sets of the first in-shaft branch passage 22a and the first introduction passage 61a and sets of the second in-shaft branch passage 22b and the second introduction passage 62a are provided.

The first cooling passage 61 includes the first folded passage 61d on the downstream side of the first main passage 61b, and the first folded passage 61d extends through the rotor core 40 in the axial direction to the first end plate 41a such that the cooling oil flow out from the first end plate 41a. The second cooling passage 62 includes the second folded passage 62d on the downstream side of the second main passage 62b, and the second folded passage 62d extends through the rotor core 40 in the axial direction to the second end plate 41b such that the cooling oil flow out from the second end plate 41b.

The first folded passage 61d and the second folded passage 62d in the third example respectively correspond to the passages 60 to the upstream portions of the first folded passage 61d and the second folded passage 62d in the second example. The basic configurations thereof are the same.

The third example differs in that the downstream side of the first folded passage 61d is located on the first end plate 41a side and continues to a first upstream liquid outlet passage 81b. It also differs in that the downstream side of the second folded passage 62d is located on the second end plate 41b side and continues to a second downstream liquid outlet passage 82b.

The passage 60 in the third example is also devised on the basis of the disclosed technique described above. Therefore, the same cooling effect as that in the second example can be exerted.

### <Fourth Example>

Depending on the specifications of the motor 1, the passage 60 that is not folded back is also considered. This is a case where the cooling oil flows from one of the end plates 41a, 41b, flows in the axial direction through the rotor core 40, and then flows out from the other of the end plates 41a, 41b. In a fourth example, such the passage 60 is described as a modified example of the third example.

Thus, similar to the third example, the eight passages 60, each of which extends in the axial direction, are also arranged in the illustrated rotor core 40. In a manner to correspond thereto, in the fourth example, four each of the sets of the first in-shaft branch passage 22a and the first introduction passage 61a and the sets of the second in-shaft branch passage 22b and the second introduction passage 62a are provided.

The configurations up to the first main passage 61b and the second main passage 62b in the fourth example are the same as those in the third example.

The fourth example differs in that the downstream side of the first main passage 61b continues to the first downstream liquid outlet passage 81a. It also differs in that the downstream side of the second main passage 62b continues to the second upstream liquid outlet passage 82a.

The passage 60 in the fourth example is also devised on the basis of the disclosed technique described above. Therefore, the same cooling effect as that in the third example can be exerted.

Here, the disclosed technique is not limited to the above-described embodiment and includes various other configurations.

For example, in the embodiment, the drive motor 1 that is mounted on the automobile is exemplified as the rotary electric machine. The disclosed technique is not limited thereto, and can also be applied to an industrial rotary electric machine and the like.

In the third example, as in the second example, the direction of the relay passages 70 with respect to the rotation direction is set for the purpose of reducing the difference in the amount of the cooling oil. However, depending on the specifications, it may be set in the reverse direction as in the first example.

The passages 60 in the first to fourth examples may be appropriately combined as necessary.

### [Reference Signs List]

1: motor (rotary electric machine)
2: shaft
3: stator
4: rotor
4a: magnetic pole portion
20: in-shaft passage
21: in-shaft main passage
21a: inflow port
22a: first in-shaft branch passage
22b: second in-shaft branch passage
40: rotor core (main body portion)
41: end plate
41a: first end plate (upstream end portion)
41b: second end plate (downstream end portion)
44: groove portion
45: permanent magnet
51: first void
52: second void
53: third void
54: fourth void
55: fifth void
60: passage
61: first cooling passage
61a: first introduction passage
61b: first main passage
61c: first bent portion
61d: first folded passage
62: second cooling passage
62a: second introduction passage
62b: second main passage
62c: second bent portion
62d: second folded passage
70: relay passage
71a: first downstream relay passage
71b: first upstream relay passage
72a: second upstream relay passage
72b: second downstream relay passage
80: liquid outlet passage
80a: outflow port
81a: first downstream liquid outlet passage
81b: first upstream liquid outlet passage
82a: second upstream liquid outlet passage
82b: second downstream liquid outlet passage
100: branched cooling passage
Jr: rotation axis
Jm: magnetic pole line

## Claims

1. A rotor cooling structure of a rotary electric machine comprising:
a shaft (2) which is supported in a rotatable manner about a rotation axis;
a rotor (4) that is attached around the shaft (2); and
a stator that is arranged around the rotor (4) via an air gap, the rotor cooling structure cooling the rotor (4) by supplying a coolant to a passage, wherein
the shaft (2) has an in-shaft passage (20) which extends in an axial direction and into which the coolant flows from one end portion thereof,
the rotor (4) has:
a first cooling passage (61) into which the coolant is introduced from an upstream side of the in-shaft passage (20); and
a second cooling passage (62) into which the coolant is introduced from a downstream side of the in-shaft passage (20),
the first cooling passage (61) has:
a first introduction passage (61a) that extends radially outward through an upstream end portion of the rotor (4) from the in-shaft passage (20); and
a first main passage (61b) that communicates with a downstream side of the first introduction passage (61a) and extends in the axial direction through a main body portion of the rotor (4) to a downstream end portion of the rotor (4),
the second cooling passage (62) has:
a second introduction passage (62a) that extends radially outward through the downstream end portion from the in-shaft passage (20); and
a second main passage (62b) that communicates with a downstream side of the second introduction passage (62a) and extends in the axial direction through the main body portion to the upstream end portion, and
the first introduction passage (61a) is provided with a first bent portion (61c), and the second introduction passage (62a) is provided with a second bent portion (62c), wherein said first and second bent portions (61c, 62c) are bent or inclined in opposite rotation directions of the rotor (4) so one of said first and second bent portions (61c, 62c) is bent in a forward rotation direction of the rotor (4) and the other one of said first and second bent portions (61c, 62c) is bent in a reverse rotation direction of the rotor (4).

2. The rotor (4) cooling structure according to claim 1, wherein
the first bent portion (61c) is bent in a forward rotation direction of the rotor (4) and the second bent portion is bent in a reverse rotation direction of the rotor (4).

3. The rotor cooling structure according to claim 1 or 2, wherein
the first cooling passage (61) further has a first folded passage (61d) on a downstream side of the first main passage (61b), the first folded passage (61d) extending in the axial direction through the main body portion to the upstream end portion and then extends in the axial direction to the downstream end portion such that the coolant flows out from the downstream end portion, and
the second cooling passage (62) further has a second folded passage (62d) on a downstream side of the second main passage (62b), the second folded passage (62d) extending in the axial direction through the main body portion to the downstream end portion and then extends in the axial direction to the upstream end portion such that the coolant flows out from the upstream end portion.

4. The rotor cooling structure according to claim 1 or 2, wherein
the first cooling passage (61) further has a first folded passage (61d) on a downstream side of the first main passage (61b), the first folded passage (61d) extending in the axial direction through the main body portion to the upstream end portion such that the coolant flows out from the upstream end portion, and
the second cooling passage (62) further has a second folded passage (62d) on a downstream side of the second main passage (62b), the second folded passage (62d) extending in the axial direction through the main body portion to the downstream end portion such that the coolant flows out from the downstream end portion.

5. The rotor cooling structure according to claim 3 or 4, wherein
the first cooling passage (61) further has a first downstream relay passage (71a) that is interposed between the first main passage (61b) and the first folded passage (61d), and the second cooling passage (62) further has a second upstream relay passage (72a) that is interposed between the second main passage (62b) and the second folded passage (62d), and
the first downstream relay passage (71a) is formed to be directed in the reverse rotation direction of the rotor (4), and the second upstream relay passage (72a) is formed to be directed in the forward rotation direction of the rotor (4).

6. The rotor cooling structure according to claim 3 or 4, wherein
the first cooling passage (61) further has a first downstream relay passage (71a) that is interposed between the first main passage (61b) and the first folded passage (61d), and the second cooling passage (62) further has a second upstream relay passage (72a) that is interposed between the second main passage (62b) and the second folded passage (62d), and
the first downstream relay passage (71a) is formed to be directed in the forward rotation direction of the rotor (4), and the second upstream relay passage (72a) is formed to be directed in the reverse rotation direction of the rotor (4).

7. The rotor cooling structure according to any one of the preceeding claims, wherein
each of the first cooling passage (61) and the second cooling passage (62) further has a liquid outlet passage (80) which extends radially inward through the upstream end portion or the downstream end portion and from which the coolant flows out.

8. The rotor cooling structure according to anyone of the preceeding claims, wherein
the rotor (4) further has:
a rotor core (40) that includes plural permanent magnets (45) arranged such that magnetic poles are arranged in a circumferential direction and that constitutes the main body portion; and
paired end plates (41) that are in close contact with both end surfaces facing the axial direction of the rotor core (40) and respectively constitute the upstream end portion and the downstream end portion, and
on an inner surface of each of the end plates (41) facing said rotor core (40), a groove portion (44) constituting the passage is formed in a plane-symmetrical shape, and the end plates (41) are used in common.

9. The rotor cooling structure according to anyone of the preceeding claims, wherein the rotor (4) is provided with a plurality of first cooling passages (61) arranged on the upstream side of the in-shaft passage (20) and distributed in different angular sectors around the axis of rotation, and a plurality of second cooling passages (62) arranged on the downstream side of the in-shaft passage (20) and distributed in different angular sectors around the axis of rotation, wherein each of said first cooling passages (61) is provided with a first introduction passage (61a) including a first bent portion (61c), wherein all first bent portions (61c) are bent or inclined in the same rotation direction, and each of said second cooling passages (62) is provided with a second introduction passage (62a) including a second bent portion, wherein all second bent portions (62c) are bent or inclined in the same rotation direction opposite to the rotation direction into which all first bent passages are bent or inclined.

10. The rotor cooling structure according to anyone of the preceeding claims, wherein said first and second bent portions (61c, 62c) are bent or inclined relative to the radial direction by the same amount of bending or the same amount of inclination in opposite directions of rotation of the rotor (4).

11. The rotor cooling structure according to anyone of the preceeding claims, wherein the first bent portion (61c) and/or the second bent portion is inclined relative to the radial direction at an inclination angle ranging from 20°-70° or 30°-60°.

12. The rotor cooling structure according to anyone of the preceeding claims, wherein said first bent portion (61c) form an outer part of said first introduction passage (61a) which further includes a first radially extending inner portion on an upstream side of said first bent portion (61c), and/or said second bent portion forms an outer part of said second introduction passage (62a) which further includes a second radially extending inner portion on an upstream side of said second bent portion.

13. The rotor cooling structure according to claim 5 or 6 or anyone of the claims depending on claim 5 or 6, wherein the first downstream relay passage (71a) has an inclination substantially corresponding, by amount, to the amount of inclination of the first bent portion (61c), and/or the second upstream relay passage (72a) has an inclination substantially corresponding, by amount, to the amount of inclination of the second bent portion.

14. A rotary electric machine for driving an automobile, the rotary electric machine comprising a rotor cooling structure as defined by anyone of the preceeding claims.

15. An automobile comprising a rotary electric machine for driving the automobile, said rotary electric machine as defined by the preceding claim.
